Europäisches Patentamt

European Patent Office

Office européen des brevets

(11) Publication number: **0 311 306**
**A1**

## EUROPEAN PATENT APPLICATION

(21) Application number: **88309060.7**

(22) Date of filing: **29.09.88**

(51) Int. Cl.⁴: **F16H 13/02**

(30) Priority: **29.09.87 GB 8722850**

(43) Date of publication of application:
**12.04.89 Bulletin 89/15**

(84) Designated Contracting States:
**DE GB IT SE**

(71) Applicant: **Perry, Forbes George De Brie**
**Long Meadow Church Street**
**Charlbury Oxford OX7 3PD(GB)**

(72) Inventor: **Perry, Forbes George De Brie**
**Long Meadow Church Street**
**Charlbury Oxford OX7 3PD(GB)**

(74) Representative: **Bayliss, Geoffrey Cyril et al**
**BOULT, WADE & TENNANT 27 Furnival Street**
**London EC4A 1PQ(GB)**

(54) **Roller drive assembly.**

(57) A roller drive assembly comprises two co-axial bevelled central rollers (1, 11) each coupled to a bevelled annulus (4) by way of a respective set of bevelled rollers (2, 12) each engaging the respective central roller and the annulus. The generatrices of the engagement surfaces of the rollers in each set and the annulus intersect at a respective common point in the axis of the central rollers. Restraining lips (6) are provided at the ends of the annulus to restrain axial movement of said sets of bevelled rollers outwardly from said common point.

## ROLLER DRIVE ASSEMBLY

The present invention relates to roller drive assemblies.

In particular the invention relates to the kind of roller drive assembly described in EU-A-0231990 and comprising a first central bevelled roller coupled to a bevelled annulus coaxial with the central roller by way of a set of bevelled rollers each engaging the central roller and the annulus, the generatrices of the engagement surfaces of the rollers and the ring intersecting in a common point on the axis of the central roller. In a preferred form of such an assembly there is a second central roller coaxial with and spaced axially from the first, the second central roller being coupled to a respective bevelled drive ring, integral with the first drive ring, of the annulus by means of the respective set of rollers, the second central roller being coupled to a common member with the first central roller and the bevelling of the second central roller and the respective set of rollers being in a sense opposite to that of the bevelling of the first central roller and its respective set of rollers.

In such a roller drive assembly the input speeds, and therefore the rolling surface speeds, can be very high, far higher than the normal operation of any tapered roller beinring could tolerate. Centrifugal action at the sun roller throws off any fluid on the surface and it would be a major problem to apply effectively adequate cooling flow to a sun-lip which is of small periferal length and contacted by planet rollers in perhaps six places. There would therefore be little chance of keeping temperatures down and seizure would result on a sun roller lip.

The feature of the present invention is a restraining lip which is provided on the said annulus for restraining axial movement of the rollers in said set in a direction away from the respective common point. The lip is preferably provided at one end of the respective drive ring surface; there may be a lip for each of the two drive rings which are provided on the annulus in an arrangement having two sets of rollers transmitting drive from a respective central roller to the common annulus.

The arrangement according to the invention results in the following advantages:

a) the lip peripheral length is now greatly increased which means a bigger time interval between the passing of each planet contact

b) there is a greater mass of metal around the lip to conduct heat away

c) the lip has a greater surrounding surface area for cooling flow heat exchange

d) fluid may be supplied to the rolling surfaces and centrigual action within the annulus takes all the fluid outwards over the lip, thus facilitating heat transfer and ensuring that the areas of high pressure contact between planets and annulus are always adequately flooded.

e) the contact geometry in the planet/sun arrangement is convex/concave. This greater degree of conformity can give greater contact area in the lip and thus can reduce the average contact stress and the coefficient of fluid friction. This gives longer life and reduced operating losses.

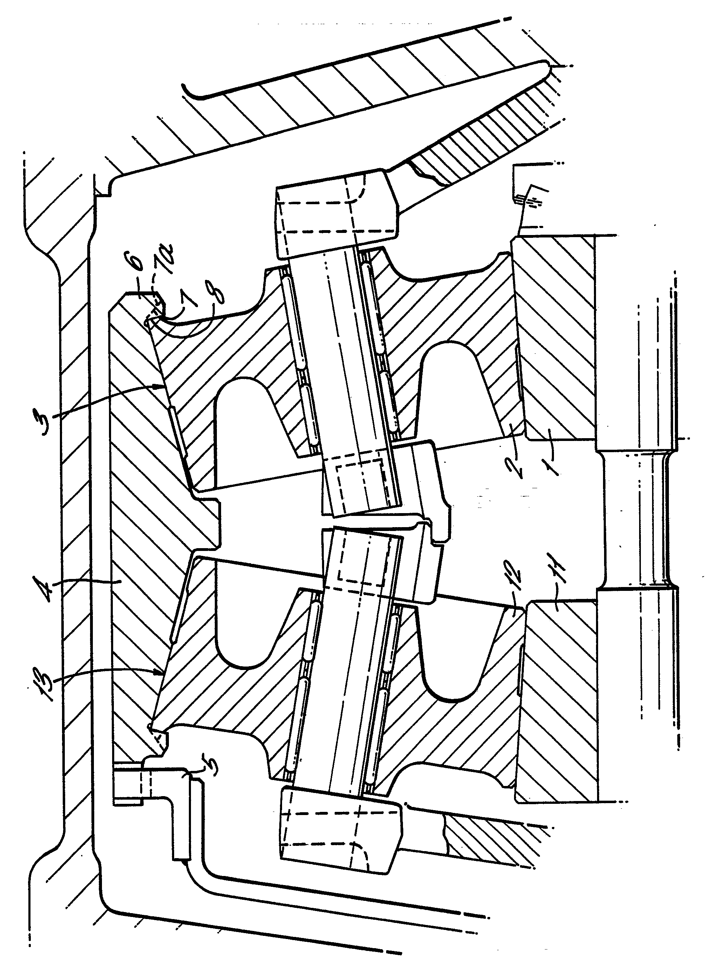

The accompanying drawing illustrates one form of the invention.

In the drawing is shown a roller drive assembly comprising two central, coaxial rollers 1 and 11 each of which is coupled by way of a respective set of tapered rollers 2 and 12 respectively, only one roller in each set being illustrated, for convenience. The set of rollers 2 engages a drive ring 3 presented by an inner surface of an annulus 4 which is coupled to an output member 5. Likewise the set of rollers 12 engages a drive ring surface 13 also provided by the annulus 4. The engagement surfaces of the roller 1 and the set of rollers 2 and of the drive ring 3 have generatrices intersecting at a common point on the axis of the roller 1; likewise the engagement surfaces of the roller 11, the set of rollers 12 and the drive ring 13 meet at a common point likewise on the axis of the roller 11. The general arrangement is the same as that described in the aforementioned European patent application. That application includes a description of means for urging the rollers in a set in an axial direction (towards the respective common point) and describes for this purpose a hydraulic system by means of which common hydraulic pressure is supplied for urging the rollers in a set towards the respective common point so as to avoid the use of rolling metal thrust bearings except when the members of the assembly are relatively stationary or moving at relatively low speeds.

A feature of the present invention is a restraining lip 7 which is provided at one end of the drive surface 3 of the annulus 4; a similar lip may be provided at the outer end of the drive surface 13 of the annulus 4.

The lip 6 has a surface 7 facing generally axially of the assembly; it is confronted by an annular surface 8 on each of the rollers 2 in the respective set.

It is not necessary for the angle of the lip, that is to say the angle of the surface 7 to be at right angles to the axis of the roller 2. It may be varied within quite wide limits. It may for example be as shown by the dashed lines 7a. However the angle of the confronting surface of the roller 2 should be varied correspondingly so that the film separation between lip 6 and roller annular surface 8 is optimised whilst minimising the stress level on the lip and frictional losses.

## Claims

1. A roller assembly comprising a first central bevelled roller coupled to a bevelled annulus coaxial with the central roller by way of a set of bevelled rollers each engaging the central roller and the annulus, the generatrices of the engagement surfaces of the rollers and the ring intersecting in a common point on the axis of the central roller, characterised in that a restraining lip is provided on said annulus for restraining axial movement of the rollers in a direction away from the common point.

2. A roller drive assembly as claimed in Claim 1, wherein the lip is provided at one end of the drive ring surface.

3. A roller drive assembly as claimed in Claim 1 or Claim 2, wherein a second central roller is provided coaxial with and spaced axially from the first, the second central roller being coupled to a respective bevelled drive ring, integral with the first drive ring, of the annulus by means of the respective set of rollers, the second central roller being coupled to a common member with the first central roller and the bevelling of the second central roller and the respective set of rollers being in a sense opposite to that of the bevelling of the first central roller and its respective set of rollers, said annulus being provided with spaced restraining lips for each of the two drive rings for restraining axial movement of the rollers in said respective sets in directions away from the respective common points.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 375 739 (NASVYTIS) <br> * Column 2, lines 35-61; figure 1 * | 1,2 | F 16 H 13/02 |
| X | FR-A- 630 183 (HOHENZOLLERN AG) <br> * Page 2, lines 1-31; figure 1 * | 1,2 | |
| A | GB-A- 297 396 (COWBURN) <br> * Whole document * | 1,2 | |
| D,A | EP-A-0 231 990 (PERRY) <br> * Whole document * | 1,3 | |

TECHNICAL FIELDS
SEARCHED (Int. Cl.4)

F 16 H 13/00

The present search report has been drawn up for all claims

| Place of search | Date of completion of the search | Examiner |
|---|---|---|
| THE HAGUE | 13-12-1988 | FLORES E. |

EPO FORM 1503 03.82 (P0401)